# EUROPEAN PATENT APPLICATION

(11) **EP 4 461 127 A1**
(43) Date of publication of application: **13.11.2024**
(21) Application number: 24164076.2
(22) Date of filing: 18.03.2024
(51) Int. Cl.: A01G 25/16, G06N 20/00

(54) **A SYSTEM CONFIGURED FOR CULTIVATING PLANTS GROWN IN A CULTIVATION AREA IN AN OPEN OR CONTROLLED ATMOSPHERE**

(30) Priority: 20.03.2023 IT 202300005157
(71) Applicant: Ecobubble S.r.l. Startup Costituita Ai Sensi Dell'Art. 4 Comma 10 Bis D.L. 3/2015 Conv. Con. Legge 33/2015, 00162 Rome (IT); Pallini, Fabio, 20151 Milano (IT)
(72) Inventor: PALLINI, Fabio, 20151 MILANO (IT); NESCATELLI, Nicola, 00199 ROME (IT)
(74) Representative: Bellomia, Paolo

(57) **Abstract**

Described is a system (1) configured for cultivating plants grown in a cultivation area in an open or controlled atmosphere, comprising a detection module (10) which records by means of a detection device (11) at least one characteristic of the plants or of the cultivation area or of the atmosphere; a processing module (20) comprising at least one "Neural Networks" and/or "Artificial Intelligence" processing unit configured to perform a monitoring and processing of the surveys carried out by the detection module (10) and/or by external sources (E) for converting them into an output comprising data and/or instructions and/or a mapping of the cultivation area; a virtualisation module (30) configured to perform a simulation (31) of the development of said plants and/or the variation of at least one above-mentioned survey detected as a function of the above-mentioned output; and an actuation module (40) configured to control one or more actuation devices for providing one or more of the following functions: irrigation or water supply (41), administration of fertilisers or nutrients (45), administration of pesticides (48), ventilation and aeration (47), climate control (43), supply of luminous energy (46) and introduction or filtering of gas (44).

## Description

This invention relates to a system for cultivating plants grown in a cultivation area in an open or controlled atmosphere, wherein the system cultivates the plants in an automated and autonomous manner.

With the Earth's climatic conditions worsening due to climate change, there is an increasing need for integrated cultivation systems that can operate in increasingly resource-poor geographical areas, including water or fertile land, that can provide an optimised use of the scarce resources to minimise their waste.

Further, with the rebirth of the aerospace sector and the hypotheses of establishment of the first extra planetary colonies, the need arises of providing systems for the management of crops in greenhouses in space which are available in orbit or on other planets in the solar system which are substantially self-manageable with minimum human intervention.

Disadvantageously, according to the prior art in the agricultural or plant cultivation sector, the cultivation technologies available still require human intervention in an extensive manner in terms of both monitoring and activities linked to the cultivation, from sowing to harvesting.

Many of the technologies available in the prior art are still based on human observation, intuition or methodologies unrelated to the vegetative states, often causing a waste of resources and yields of crops which are not optimal, as well as a substantial interdependence from the presence of human operators.

Recently, the prior art has seen the introduction of countless innovations which can be used for automating activities linked to the cultivation of plants, including the use of automated harvesting systems, sensors dedicated to the surveying of ambient parameters of the cultivation area, automated systems for irrigation or administration of nutrients and the like.

Disadvantageously, the available systems are not able to manage the entire growth cycle of the plants in an integrated and dynamic manner and which takes into account the specific needs of the plants or potential risk factors for their optimum growth.

Consequently, these solutions, too, are inevitably dependent on human intervention and are unsuitable, for example, for being implemented inside greenhouses in space, where the human intervention is necessarily limited and discontinuous, both for issues of space for manoeuvring for the human operators and for time to be dedicated to these activities as opposed to other more critical activities. In particular, a constant human presence could not even be guaranteed continuously inside these types of greenhouses.

One of the most problematic factors linked to the integrated automation of the cultivation systems currently provided by the prior art is the management of risk factors and emergencies.

In particular, the traditional systems provide for at least a partial dependence on human intervention, since the time-scales for survey and subsequent implementation of corrective measures may not be immediate in their implementation and, above all, are unable to take flexible actions according to a wide variety of possible problems and depending on a wide variety of environmental factors.

An incorrect identification of risk factors or stress factors of plant growth or environmental conditions and a lack of timely implementation of corrective solutions may not only penalise optimum plant growth but also result in considerable damage to the crop or, in extreme cases, the loss of crops.

In environments in which human intervention is not always available, such as, for example, in crops in greenhouses in space, the time interval between survey and response action may risk being quite lengthy and the damage on the crop due to the lack of production could be considerable.

With regard to these types of crops, consequently, it is necessary not only to be timely in identifying significant factors of vegetative stress in a widespread manner over an entire cultivation area, differentiated by type of plant, but to foresee and detect these potential stresses even before their physical manifestation.

The technical purpose of the invention is therefore to provide a cultivation system which overcomes the drawbacks of the prior art.

The aim of the invention is therefore to provide a system for cultivating plants which can be implemented in a cultivation area in an open or controlled atmosphere which manages in an integrated manner all the phases necessary for the growth of plants in different types of crops in a substantially autonomous manner and independent from human intervention.

A further aim of this invention is to provide a system for cultivating plants which manages in a preventive manner potential problems for the growth of the plants and of the system.

A further aim of this invention is to provide a system for cultivating plants which is able to optimise the use of resources and minimise waste.

The technical purpose indicated and the aims specified are substantially achieved by a system for cultivating plants grown in a cultivation area in an open or controlled atmosphere according to the technical features described in one or more of the appended claims. The dependent claims correspond to alternative embodiments.

More specifically, the system for cultivating plants comprises a detection module connected or connectable to at least one detection instrument.

The detection instrument is installed or installable in a fixed or mobile manner with respect to the cultivation area.

The detection instrument is configured for recording at least one survey identifying characteristics of the plants or of the cultivation area or of the atmosphere.

The system for cultivating plants further comprises a processing module.

The processing module comprises at least one processing unit with "Neural Networks" and/or "Artificial Intelligence" configured to perform a monitoring and a processing of the surveys recorded by the detection module and/or from external sources for converting them into an output comprising data and/or instructions and/or a mapping of the cultivation area.

The system for cultivating plants further comprises a virtualisation module configured to perform a simulation of the development, of the plants and/or of the variation of the at least one survey detected, as a function of the above-mentioned output.

The virtualisation module is also configured for sending a modification signal to the processing module to define a modified output if the simulation shows that, by means of the above-mentioned output, the development of the plants and/or the variation of the survey do not satisfy the expected development and/or variation parameters.

The system for cultivating plants further comprises an actuation module configured for controlling one or more actuation devices as a function of the above-mentioned output or modified output.

The actuation device provides one or more of the following functions.

A first function corresponds to the irrigation or supplying of water to a fraction of or the entire above-mentioned cultivation area.

A further function corresponds to the administration of fertilisers or nutrients to each of the plants or the cultivation area.

A further function corresponds to the administration of pesticides to each of the plants or the cultivation area.

A further function corresponds to the ventilation and aeration of a fraction of or the entire atmosphere.

A further function corresponds to the climate control of a fraction of or the entire atmosphere and/or the cultivation area.

A further function corresponds to the supply of light energy to each of the plants. A further function corresponds to the introducing or filtering of gas into the atmosphere.

The description is set out below with reference to the accompanying drawings which are provided solely for purposes of illustration without restricting the scope of the invention and in which:

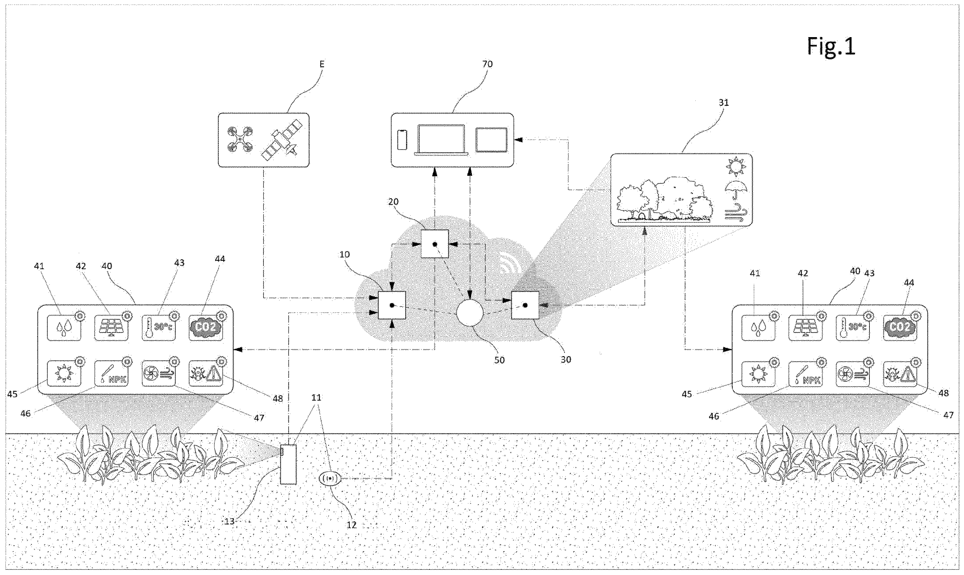

- Figure 1 shows a schematic view of a system for cultivating plants according to the invention.

With reference to Figure 1, the numeral 1 denotes a system for cultivating plants, grown in a cultivation area in an open or controlled atmosphere, comprising a plurality of components.

The term "open atmosphere" means a traditional cultivation method wherein the plants are in contact with the air of the geographical environment.

The term "controlled atmosphere" means a method of cultivation in a cultivation area preferably at least partly closed, having at least a structure for protecting against the atmospheric conditions of the plant; or totally closed, such as, for example, crops in greenhouses or in a laboratory wherein the parameters of the cultivation area and the atmospheric parameters can be more easily controlled. The system for cultivating plants 1 will hereafter be referred to simply as "the system".

Generally speaking, the system 1 may be used in various contexts, such as, for example, traditional open field farming, in an urban environment, for hydroponic/aquaponic/aeroponic cultivation, for cultivation in substrate cultivation areas, cultivation areas in pots, vertical greenhouses, greenhouses in extra-planetary space and the like.

The system 1 is designed according to the "Plant Driven System" concept. In other words, the system 1 independently takes the decisions relating to the activities and corrective measures to be undertaken to promote optimum growth of the plants using data which can be objectively obtained from the plants themselves, from the cultivation area or from the atmosphere without any human contribution.

The system 1 comprises a detection module 10, connected or connectable to at least one detection instrument 11, installed or installable in a fixed or mobile manner with respect to the cultivation area.

By means of the at least one detection instrument 11, the detection module 10 is configured to record at least one survey identifying characteristics of the plants or of the cultivation area or of the atmosphere of the environment of the cultivation area.

The detection instrument 11 may generally correspond to a sensor 12 designed to detect a survey of a measurement of a physical, chemical or biological characteristic of the plants or of the cultivation area or of the atmosphere. Further, the detection instrument 11 may also be an optical and/or image acquisition instrument 13 relative to the plants, to the cultivation area or to the atmosphere of the cultivation area.

The system 1 further comprises a processing module 20 comprising at least one processing unit with "Neural Networks" (NN) and/or "Artificial Intelligence" (IA), configured to perform a monitoring and a processing of the surveys recorded by the detection module 10 and/or from external sources "E" for converting them into an output comprising data and/or instructions and/or a mapping of the cultivation area.

In particular, in order to process the data acquired by the detection unit 10, the processing module 20 comprises at least one "Neural Networks" and/or "Artificial Intelligence" processing unit. This processing unit is used for creating and using models which are flexibly adapted or adaptable to the characteristics detected, by using machine learning logics, both supervised, unsupervised and reinforced (Machine Learning, Deep Learning). For this reason, the systems based on Neural Networks and Artificial Intelligence are particularly appreciable as they allow the system 1 to improve progressively over time, gradually learning and actively integrating new data, information and even any errors.

Among the different types of technologies of "Neural Networks" (NN) and/or "Artificial Intelligence" (Al) that can be exploited there are "Artificial Neural Networks", "Convolutional Neural Networks" (CNN), "Adaptive Neural Networks" (ANN), "Recurring Neural Networks" (RNN), "Lateral Feedback Neural Networks" (LFN), "Generative Neural Networks" (GAN), "Conditional Generative Neural Networks" (cGan) and others.

The processing module 20 may, however, also use at least one traditional "Data Analytics" type processing unit, that is to say, performing statistical or econometric analyses wherein the data collected are interpreted according to traditional models.

Further, the system 1 can also process and exploit simulation or forecasting models, which allow the needs of the plants to be anticipated and constitute an optimised activity plan which takes into account an optimised and efficient management of the resources which can be used in the cultivation area, allowing a saving in terms of time and costs.

The total output coming from the processing module 20 comprises data and/or instructions and/or a mapping of the cultivation area.

The detection instrument 10 can in fact record surveys relative to the spatial arrangement of the plants in 3D by means of the optical detection and/or image acquisition instrument 13. By means of these surveys, the processing module 20 is able to constitute the above-mentioned mapping of the cultivation area, being able to assign a surface and/or a volume occupied and spatial coordinates to each plant. The system 1 can use the output from the processing module 20 to form a simulation 31 of a virtual 3D model of the entire cultivation area, of the plants contained inside it and the atmosphere of the cultivation area.

More specifically, the system 1 further comprises a virtualisation module 30 dedicated to performing the simulation 31 of the virtual 3D model.

The virtualisation module 30 is configured to perform the simulation 31. In particular, the simulation 31 is able to reconstruct inside the virtual 3D model the development of the plants and/or the variation of at least one survey detected as a function of the output obtained from the processing module 20.

Further, the virtualisation module 30 can not only create a simulation 31 which is a virtual recreation of the plants inside the cultivation area according to the real characteristics detected, but also a simulation 31 of the predictive type, wherein a hypothetical evolution of the status of the plants inside the cultivation area is simulated as a function of the variation planned over time of the characteristics of the plants or according to imaginary variations assumed by the processing module 20.

Advantageously, the above-mentioned aspect can be used for displaying in advance the growth of the plants and how these might evolve over time as a function of the variation of characteristics of the plants, of the cultivation area or of the atmosphere.

The virtualisation module 30, once the simulation 31 has been processed, is also configured for sending a modification signal to the processing module 20 to define a modified output if the simulation 31 indicates that, by means of the processed output, the development of the plants and/or the variation of the survey of a predetermined physical, chemical or biological characteristic or do not satisfy expected development and/or variation parameters.

The processing module 20 receives the modification signal, processes it and sends corrective measures to be implemented on the plants, on the cultivation area or on the atmosphere.

More specifically, the system 1 comprises an actuation module 40 configured for controlling one or more actuation devices as a function of the above-mentioned output or modified output by the processing module 20.

The processing module 20 uses the models "NN" and "IA" to generate automation commands to the actuation module 40, which actuates these commands by means of at least one actuation device.

The actuation device may provide one or more of the following functions.

A first function corresponds to the management of the irrigation of or the supply of water 41 to a fraction of or the entire said cultivation area by means of a suitable water system designed to supply and distribute water. The system may be integrated in the actuation module 40 or be pre-existing. Alternatively, the actuation device may be limited to comprising only the possible device for adjusting the flow of water, such as, for example, a variable flow valve, or it may be limited simply to providing the control commands to an external system.

A further function corresponds to administering fertilisers or nutrients 45 to each of said plants or to said cultivation area. In this case, too, an apparatus is provided dedicated to the storage and distribution of fertilisers and nutrients supplied to the plants according to variable quantities and frequencies which can be managed by the actuation module 40. The actuation module 40 may be limited to the control of the apparatus or comprises partly or totally the apparatus.

A further function corresponds to administering pesticides 48 to each of said plants or to said cultivation area. In this case, too, an apparatus is provided for storing and distributing pesticides according to variable quantities and frequencies which can be managed by the actuation module 40, wherein the actuation module 40 may be limited to the control or comprises partly or totally the apparatus.

A further function corresponds to the ventilation and aeration 47 of a fraction or the entire atmosphere of the cultivation area. More specifically, the actuation module 40 may comprise an actuation device which may be a mechanism dedicated to the opening of an aeration window or door or a ventilation apparatus comprising spiral fans or other types of fans present in the prior art of which the speed and/or intensity of the circulating air current may be controlled in a precise and flexible manner. The actuation module 40 may be limited to the control of the apparatus or comprise partly or totally the apparatus.

Furthermore, the function of ad mistering pesticides can be integrated with automated pest removal systems, optimising the required quantity of pesticides released.

A further function corresponds to the climate control 43 of a fraction of or the entire said atmosphere and/or said cultivation area. More specifically, the actuation module 40 may be able to comprise and/or control climate control systems comprising heat pumps, heating or cooling systems, humidification or dehumidification systems and the like, which are overall able to control the temperature and the humidity located and/or distributed of the atmosphere of the work area.

Another function corresponds to the supply of light energy 46 in a specific manner for each plant. For example, the actuation module 40 may comprise and/or control actuating devices which are limited to the screening or filtering of the sunlight in such a way as to adjust the light energy radiated towards the plants and/or the type of light spectrum with which to irradiate the plants in such a way as to optimise specific functions such as, for example, optimise the heating, the pigmentation of the fruits, photosynthesis and the like.

Alternatively, the actuation module 40 can comprise and/or control actuation devices constituting emitters of light or electromagnetic waves at specific wavelengths, such as, for example, infrared lamps, "UV" lamps and the like. These devices are able to perform an adjustment of the light spectrum, adapting the intensity and the light spectrum on the basis of the specific needs of the plants or the cultivation area, optimising the growth.

A further function corresponds to the introducing or filtering gas 44 into said atmosphere of the cultivation area. More specifically, the actuation module 40 may comprise and/or control actuation devices comprising systems for distributing and dispersing working gas, including carbon dioxide, oxygen, nitrogen, ozone and the like, or actuation devices which manage the localised release for each plant. The control of the proportions of carbon dioxide-oxygen is particularly important as they can be directly associated with the stimulation of photosynthesis of the plants and, consequently, their overall growth.

The combined control of the humidity, temperature, concentration of specific constituents in the atmosphere and the circulation of air is also of fundamental importance for reducing the risk of plant diseases or combating the diffusion of parasites, such as, for example, moulds or lichens.

The system 1 may comprise specific modules for the automation of the processes to perform sowing, transplanting and thinning of the plants, optimising the density and the distribution of the crops in a combined manner with any other external automation devices dedicated to this function.

Further, the system 1 may comprise specific modules for automation of the harvesting and selection processes of mature plants to guarantee the maximum harvesting efficiency and productivity using in a combined manner any other external automation devices dedicated to this function.

Further, the system 1 may comprise specific modules for automation of the cleaning processes and the regular maintenance of the cultivation area, such as cleaning of the surfaces, replacement of the air or water filters and the verification of the structural integrity.

Advantageously, the system 1 is autonomous overall in the management of all the above-mentioned functions, controlling them by means of suitable automated actuation devices, reducing to a minimum the human intervention.

Preferably, the operating logic of the system 1 is installed or installable on a "Cloud" architecture 60 accessible from a web platform 70.

The term "operating logic" means the software structure at the base of the system 1.

Advantageously, the system 1 is designed to be scalable and accessible by a wide range of users, from small farmers to large farms, which are able to adapt and continuously improve thanks to the use of machine learning and the virtualisation of plants in the cultivation area.

The end users are able to monitor and interact with the system for monitoring, and, if necessary, adding modification commands, the trend of the growth of the plants inside the cultivation area also accessing the web platform 70 by means of any device which is able to navigate the Internet using a web browser or an application.

In particular, the user interface of the web platform 70 is designed to be easy to use and intuitive, allowing an easy access to the information and management of the cultivation area. The interface can display real-time data and analyses on the vegetative states of individual plant species, the local environment, the atmosphere and the effects of automation actions. The interface also provides the option to modify and adjust the actuation actions, within a certain controlled range, according to the preferences of the user.

In addition, a user may interact with the simulation 31 according to an immersive experience after adding wearable sensory devices.

Advantageously, this feature of the platform 70 allows access to the operators to observe and monitor and interact with the development of the cultivation area from any place and at any time.

The operating logic of the system 1 can also be installed locally in suitable computers or similar electronic devices. In other words, the logic of the system 1 may be installed locally on devices performing from servers and accessible from outside. However, it is preferable that the logic of the system 1 is installed outside but connectable to the devices which make up the system 1 locally.

The system 1 further comprises a memory module 50 used for storing output data from said detection 10 and/or processing 20 and/or virtualisation 30 modules, accessible from said web platform 70.

More specifically, the memory module 50 can use various data storage technologies.

One such type that can be implemented is a "Blockchain" technology.

As well as storing the data, this technology further allows the data to be made accessible to the web platform 70 or to be shared further with other external users whilst at the same time safeguarding the authenticity, the correctness and certifying the absence of external handling.

Preferably, the sensor 12 dedicated to performing the above-mentioned surveys of the physical, chemical and biological characteristics of the plants is an "IOT" or "AIOT" sensor.

"IOT" means "Internet Of Things," that is to say, sensors, software, and other integrated technologies to connect and exchange data with other devices and systems over the Internet. These devices may include devices ranging from home automation to sophisticated survey instruments.

"AIOT" means "Artificial Intelligence Of Things". "AIOT" sensors are the natural evolution of the "IOT" sensors enhanced by connecting with "IA" technologies, which enhance the "IOT" sensors with Machine Learning and Deep Learning capabilities.

The sensor 12 is able to send data in real time to the detection module 10, which is in continuous communication with the processing module 20. The processing module 20 is therefore able to constantly monitor the cultivation area and manage any emergencies immediately.

A physical feature which can be measured by at least one above-mentioned detection instruments comprises a temperature of the air, a radiant temperature, a humidity of the atmosphere, a humidity of the soil used in the cultivation area. Other physical characteristics may be further detected.

A chemical characteristic which may be detected by at least one of the above-mentioned detection instruments comprises a degree of saturation of carbon dioxide in the air, a presence and concentration of pollutants in the air, the "PH" of the water or of the soil used inside the cultivation area, a saline concentration of the soil or of the water used in the cultivation air, electrical conductivity of the water used inside the cultivation area.

Other chemical characteristics may be further detected.

A biological characteristic which can be detected by at least one of the above-mentioned detection instruments 11 comprises a presence of plant diseases, a status of at least one vital parameter of said plants, a presence of parasites or biological traces of said parasites.

Other biological characteristics may be further detected.

Preferably, the processing module 20 which can be used is one with "Diffusion" type technology for analysing data coming from the surveys of the "AIOT" sensors 11 to perform data analyses, processing large quantities of data in an efficient manner and also allowing boundary conditions to be included to detect significant information on potential margins for improving the cultivation or identify specific risk factors.

The detection instrument 11, when it is an optical and/or image acquisition instrument 13, may be further configured to detect multispectral images comprising one or more between luminosity information, reflectance information, spectroscopic information, "RGB" information as well as photographic information and/or video recordings.

The processing module 20 can process this information using one or more virtualisation technologies.

The processing module 20 may comprise processing units comprising analysis technologies of the "Computer Vision" and "Multispectral Analysis" types, allowing the system 1 to recognise the plants from at least one image and extract useful information, with which it is possible to subsequently create a digitalisation of the vegetative states of the individual plant species.

The "Computer Vision" is used to perform analysis and processing of the images of the plants to recognise the plants present in the image and to extract information about them, for example their height, the shape of the leaves and the colour.

Further, by recognising features of the images, the detection module 10 can identify any infesting weeds and can transmit the information to the processing module 20 for commanding actuation measures to the actuation module 40 aimed at eliminating them.

The "Multispectral Analysis", on the other hand, allows the plants to be analysed by measuring specific parameters linked to the reflection in certain wavelength spectra of the light rays. Based on the detection of these reflected intervals, information can be obtained on some intrinsic characteristics of the plant, such as, for example, the status of chlorophyll, the evolution of photosynthesis and the temperature of the leaves. This makes it possible to understand the state of health of the plants and to adopt the appropriate corrective actions to optimise the cultivation.

The processing module 20 allows, in addition, the information contained in the reflectance spectrum of the plants to be transformed into thousands of values which identify vegetative parameters (including, for example, that known from the literature as "NDVI", "EVI", "NDWI", "LAI", "PSI" and the like).

Further, a "Recurrent Neural Networks" (RNN) technology can be used for processing sequential data, such as, for example, the flow of temporal images, which can then be used to monitor the evolution of plant growth over time, and their reflectance spectrum. This also allows the plants and their state of health to be associated with vegetative parameters processed starting from the reflected electromagnetic spectrum by the plant.

Further, an "Attention-Based Neural Network" technology can be used to process complex data to which a hierarchical index structure can be assigned, such as the multispectral image data, where each processed index can represent a specific characteristic of the plants.

The processing module 20 and the virtualisation module 30 can further use deep learning models with neural networks of the "GAN" type, that is, "Generative Adversarial Networks", and "CGAN" type, that is, "Conditional Generative Adversarial Networks", for generating data of plants, climates and environments which can be viewed in 3D by means of the simulation 31 in virtual or augmented reality.

Advantageously, the `GAN' and 'CGAN' technologies improve the operational precision of the actuation devices as they assist the system 1 to identify with greater precision the extent and the precise area on which it is necessary to intervene, consequently contributing to optimise the cultivation process and reduce waste.

"GANs" can be further used for generating synthetic data because they allow data to be created which does not actually exist, but which nevertheless comply with the characteristics of the real plants or which can simulate environments different from those already monitored.

This characteristic is particularly important in the formulation of models and simulations in a predictive perspective, as it allows the system 1 to take into account various hypothetical scenarios before making a decision.

"CGANs" can be used for the generation of image data of specific plants in certain contexts, for example diseased plants or plants grown in certain environments, characterised by specific ambient parameters, such as lighting or shadow, specific humidity of the air or soil and the like.

Also in this case, this characteristic is particularly important in the formulation of models and simulations in a predictive perspective, as it allows the system 1 to take into account various hypothetical scenarios before making a decision.

The simulation 31 may have various scenarios illustrating time evolutions at different horizons or hypothetical evolutions of the characteristics of each single plant inside the cultivation area as a function of the variation of some basic assumptions set by the virtualisation module 30.

Again with regard to the creation of the virtual simulation 31, the system may further comprise using a "Convolutional Neural Networks 3D" (3D-CNN) technology for processing three-dimensional spatial data obtained from the 3D surveys to constitute the above-mentioned mapping of the cultivation area.

The system 1 is further compatible also with the implementation of technologies based on "Quantum Computing" (QC).

The system 1 could use the potential of "Quantum Computing" to improve the precision and speed of the process for analysing data collected both those from multispectral analyses and those for investigating the cultivation area and the atmosphere.

The processing module (20) may further comprise an "Autoencoder" unit for handling data. The data handled by this unit are used for pre-training of the "Neural Networks" and/or "Artificial Intelligence" models. In particular, use is made of a unit based on a Auto-Encoder Neural Networks (AE) technology in which a first pre-trained neural network is formed, by compressing input data and generating synthetic and catalogued output data. The output data is then subsequently used for the training of automatic learning models (Machine learning, Deep Learning) necessary for forming the above-mentioned "NN" and "AI" models designed to process the data obtained from the detection module 10, generating new data and performing the virtualisation of plants or the environment or the cultivation area inside the simulation 31.

The processing module is configured for further receiving information from external sources "E"

In particular, a first type of such data consists of surveys of images or videos or spectroscopic or RGB analyses performed by drones.

The drones can be terrestrial, aquatic or airborne. The drones are used to collect images and data on vast areas of land, monitoring crops and identifying any problems, such as plant diseases or the presence of parasites.

A second type of such data obtained from external sources consists of satellite surveys or from weather stations which the system may obtain through its Internet connection.

Satellite analysis data is used to monitor elements such as climate and air quality, obtaining valuable information on temperature distribution, humidity and the presence of pollutants in the air in a predetermined open atmosphere cultivation area.

The system 1 may further comprise at least one with photovoltaic panel generator configured for powering one or more internal components.

Preferably, the system 1 uses a generator with solar panels which can be moved of the "agrivoltaic" type.

The term "agrivoltaic" means an integrated photovoltaic system where the surface of the photovoltaic panels of the system is used both for the production of energy deriving from the sun and as "roof" to protect and manage in terms of shade and irrigation or water supply for the underlying agricultural crops.

More specifically, the actuation module 40 is able to control an actuating device 42 for orienting the photovoltaic panels of the generator in such a way as to orient them in the most convenient manner and according to many aims, such as, for example, maximising the solar energy absorbed by the panel or controlling the power or the degree of exposure of the plants to sunlight or protection against excessive exposure to rain and/or hail and/or snow and the like.

Further, the system 1 may be configured to manage further functions relative to the harvesting and processing of the fruit harvest.

Waste collection and processing: Automated systems can collect and process organic and inorganic waste, transforming it into fertilisers, compost or reusable materials.

Advantageously, the system 1 according to the invention is able to manage in an integrated manner all the steps necessary for the growth of plants in different types of crops in a manner substantially autonomous and independent from the human intervention, being able to detect by means of the detection module and respective detection devices a plurality of surveys relative to characteristics of the plants in the cultivation area, of the cultivation area itself and of the atmosphere of the cultivation area. Further, the system 1 is able to manage ina preventative manner potential problems of the growth of the plants and the system itself, using models for forecasting future or alternative scenarios for the evolution of the crop and by forming a 3D simulation of these models.

By means of these models the system 1 is further able to optimise both the use of resources and to minimise the waste, always without the need for human contribution.

The Applicant notes that the system 1 may also be further used in other sectors or uses as well as plant cultivation areas.

For example, the system 1 may be configured to manage a cell culture area comprising organic cells, organic tissues, bacteria, fungi, algae and other microorganisms.

This cultivation area may be performed in a smaller scale, such as, for example, in the in vitro cultivation context, using the system 1 adapted to these dimensions and compatible with one or more of the above-mentioned functions or further functions amongst the following.

In the case of a cultivation area of organic cells and organic tissues there can be:
- at least one detection instrument for detecting the need to add growth factors or other chemical compounds to the cell cultivation area and at least one actuation device for administering them in a precise and uniform manner;
- at least one detection instrument for monitoring the cellular aggregation and at least one actuation device for controlling the cellular aggregation to maintain an excellent cellular growth;
- at least one detection instrument for monitoring the cellular aggregation and at least one actuation device for controlling the cellular aggregation to maintain an excellent cellular growth;
- at least one detection instrument for carrying out an analysis and assessment of the quality, growth and maturing of the cells or tissues and at least one actuation device for taking such samples;
- at least one detection instrument for identifying mature cells or waste products and at least one actuation device for collecting or separating these mature cells or waste products from the cultivation area.
- at least one detection instrument for early identification of any signs of infections or contamination in the cell cultivation area by pathogens and at least one actuation device used to disinfect or remove the infected cells or tissues to prevent the spread of these pathogens.
- at least one detection instrument for monitoring the development of differentiated tissues in the cell cultivation area and at least one actuation device used for adjusting the cell differentiation process, guaranteeing the formations of the desired tissue.

In the case of a cultivation area of bacteria, fungi, algae or other micro-organisms it is possible to further foresee:
- at least one detection instrument for analysing the development of this cultivation area, including analysing the growth, density, purity and other quality characteristics and at least one actuation device used for the picking up and/or collecting and/or sampling of samples from this cultivation area.
- at least one detection instrument for analysing the development in this cultivation area and at least one actuation device used for mixing the crop to guarantee an optimum and uniform growth in the cultivation area.
- at least one detection instrument to check the growth and the quality of the micro-organisms in this cultivation area and at least one actuation device used for collecting or separating the micro-organisms from the nutrients or from the waste products.
- at least one detection instrument for checking the cleaning of the apparatuses and work surfaces and at least one actuation device used for cleaning and sterilising the apparatuses and work surfaces in this cultivation area to reduce to a minimum the risk of contamination.

## Claims

1. A system (1) configured for cultivating plants grown in a cultivation area in an open or controlled atmosphere, comprising:
- A detection module (10) connected or connectable to at least one detection instrument (11), installed or installable in a fixed or mobile manner with respect to said cultivation area, and configured for recording at least one survey identifying characteristics of said plants or of said cultivation area or of said atmosphere;
- A processing module (20) comprising at least one processing unit with "Neural Networks" and/or "Artificial Intelligence" configured to perform a monitoring and a processing of said surveys from said detection module (10) and/or from external sources (E) for converting them into an output comprising data and/or instructions and/or a mapping of said cultivation area;
- A virtualisation module (30) configured to perform a virtual simulation (31) of the development of said plants and/or of the variation of said at least one survey detected as a function of said output, said virtualisation module (30) also being configured to send a modification signal to said processing module (20) to define a modified output if said simulation (31) shows that, by means of said output, said development of the plants and/or said variation of the survey do not satisfy expected development and/or variation parameters;
- An actuation module (40) configured for controlling one or more actuation devices as a function of said output or of said modified output, said actuation device providing one or more of the following functions:
o irrigating or supplying water (41) to a fraction of or the entire said cultivation area,
o administering fertilisers or nutrients (45) to each of said plants or to said cultivation area,
o administering pesticides (48) to each of said plants or to said cultivation area,
o ventilation and aeration (47) of a fraction of or the entire said atmosphere,
o climate control (43) of a fraction of or the entire said atmosphere and/or said cultivation area,
o supplying light energy (46) to each of said plants,
o introducing or filtering gas (44) into said atmosphere.

2. The system for cultivating plants according to claim 1, wherein said system (1) comprises an operating logic installed or installable on a "Cloud" architecture accessible from a web platform (70).

3. The system (1) according to claim 2, wherein said system (1) further comprises a memory module (50) used for storing output data from said detection (10) and/or processing (20) and/or virtualisation (30) modules, accessible from said web platform (70).

4. The system (1) according to claim 3, wherein the memory unit (50) uses the "Blockchain" technology for storing the data and making said data accessible to said web platform (70) and to further receivers outside said system (1).

5. The system (1) according to any one of the preceding claims, wherein said detection instrument (11) is a sensor (12) of the "IOT" or "AIOT" type.

6. The system (1) according to any one of the preceding claims, wherein said detection instrument (11) is configured for detecting at least one physical characteristic comprising one or more between an air temperature, a radiant temperature, a humidity of the atmosphere, a moisture content of the soil used in the cultivation area, at least one spatial geographical coordinate of the positioning of each plant inside the cultivation area, a surface or volumetric extension of said plant inside said working area.

7. The system (1) according to any one of the preceding claims, wherein said detection instrument (11) is configured for detecting at least one chemical feature comprising one or more between a degree of saturation of carbon dioxide in the air, a presence and concentration of pollutants in the air, the "PH" of the water or of the soil used inside the cultivation area, a saline concentration of the soil or of the water used in the cultivation air, electrical conductivity of the water used inside the cultivation area.

8. The system (1) according to any one of the preceding claims, wherein said detection instrument (11) is configured for detecting at least one biological characteristic comprising one or more between a presence of diseases of the plants, a status of at least one vital parameter of said plants, a presence of parasites or biological traces of said parasites.

9. The system (1) according to any one of the preceding claims, wherein said detection instrument (11) is configured for detecting multispectral or 3D images comprising one or more between luminosity information, reflectance information, spectroscopic information, "RGB" information, photographic information, video recordings.

10. The system (1) according to any one of the preceding claims, wherein said processing module (20) and said virtualisation module (30) create said virtual simulation (31) of vegetative states of the individual plants using one or more virtualisation technologies of the "GAN" and/or "cGAN" and/or "3D-CNN" type.

11. The system (1) according to any one of the preceding claims, wherein the processing module (20) comprises an "Autoencoder" unit for manipulating data, said manipulated data being used for pre-training said "Neural Networks" and/or "Artificial intelligence" processing unit.

12. The system (1) according to any one of the preceding claims, wherein said processing module is configured to receive from said external sources (E) surveys of images or videos or spectroscopic or "RGB" or analyses executed by drones.

13. The system (1) according to any one of the preceding claims, wherein said processing module is configured to receive from said external sources (E) surveys from satellites or from weather stations.

14. The system (1) according to any one of the preceding claims, comprising at least one photovoltaic panel generator configured for powering one or more components of said system (1).

15. The system (1) according to claim 14, wherein said actuation module (40) controls an actuating device (42) for orientation of said photovoltaic panels of said generator.

16. A system (1) configured for managing an area for cultivating organic cells or organic tissues in an open or controlled atmosphere, comprising:
- a detection module (10) connected or connectable to at least one detection instrument (11), installed or installable in a fixed or mobile manner with respect to said cultivation area, and configured for recording at least one survey identifying characteristics of said organic cells or organic tissues or of said cultivation area or of said atmosphere;
- a processing module (20) comprising at least one processing unit with "Neural Networks" and/or "Artificial Intelligence" configured to perform a monitoring and a processing of said surveys from said detection module (10) and/or from external sources (E) for converting them into an output comprising data and/or instructions and/or a mapping of said cultivation area;
- a virtualisation module (30) configured to perform a virtual simulation (31) of the development of said organic cells or organic tissues and/or of the variation of said at least one survey detected as a function of said output, said virtualisation module (30) also being configured to send a modification signal to said processing module (20) to define a modified output if said simulation (31) shows that, by means of said output, said development of said organic cells or organic tissues and/or said variation of the survey do not satisfy expected development and/or variation parameters;
- an actuation module (40) configured for controlling one or more actuation devices as a function of said output or of said modified output, said actuation device providing one or more of the following functions:
o irrigating or supplying water (41) to a fraction of or the entire said cultivation area,
o administering fertilisers or nutrients (45) to each of said organic cells or organic tissues or to said cultivation area,
o administering pesticides (48) to each of said organic cells or organic tissues or to said cultivation area,
o ventilation and aeration (47) of a fraction of or the entire said atmosphere,
o climate control (43) of a fraction of or the entire said atmosphere and/or said cultivation area,
o supplying light energy (46) to each of said organic cells or organic tissues,
o introducing or filtering gas (44) into said atmosphere.

17. A system (1) configured for managing an area for cultivating bacteria, fungi, algae or other microorganisms in an open or controlled atmosphere, comprising:
- a detection module (10) connected or connectable to at least one detection instrument (11), installed or installable in a fixed or mobile manner with respect to said cultivation area, and configured for recording at least one survey identifying characteristics of said bacteria, fungi, algae or other microorganisms or of said cultivation area or of said atmosphere;
- a processing module (20) comprising at least one processing unit with "Neural Networks" and/or "Artificial Intelligence" configured to perform a monitoring and a processing of said surveys from said detection module (10) and/or from external sources (E) for converting them into an output comprising data and/or instructions and/or a mapping of said cultivation area;
- a virtualisation module (30) configured to perform a virtual simulation (31) of the development of said bacteria, fungi, algae or other microorganisms and/or of the variation of said at least one survey detected as a function of said output, said virtualisation module (30) also being configured to send a modification signal to said processing module (20) to define a modified output if said simulation (31) shows that, by means of said output, said development of said bacteria, fungi, algae or other microorganisms and/or said variation of the survey do not satisfy expected development and/or variation parameters;
- an actuation module (40) configured for controlling one or more actuation devices as a function of said output or of said modified output, said actuation device providing one or more of the following functions:
o irrigating or supplying water (41) to a fraction of or the entire said cultivation area,
o administering fertilisers or nutrients (45) to each of said bacteria, fungi, algae or other microorganisms or to said cultivation area,
o administering pesticides (48) to each of said bacteria, fungi, algae or other microorganisms or to said cultivation area,
o ventilation and aeration (47) of a fraction of or the entire said atmosphere,
o climate control (43) of a fraction of or the entire said atmosphere and/or said cultivation area,
o supplying light energy (46) to each of said bacteria, fungi, algae or other microorganisms,
o introducing or filtering gas (44) into said atmosphere.
